(19) **Europäisches Patentamt / European Patent Office / Office européen des brevets**

(11) **EP 4 656 046 A1**

(12) **EUROPEAN PATENT APPLICATION**
published in accordance with Art. 153(4) EPC

(43) Date of publication:
03.12.2025  Bulletin 2025/49

(21) Application number: 24800253.7

(22) Date of filing: 03.05.2024

(51) International Patent Classification (IPC):
*A01N 37/46* (2006.01)    *A01P 21/00* (2006.01)
*C05C 11/00* (2006.01)    *A01G 7/06* (2006.01)

(52) Cooperative Patent Classification (CPC):
A01G 7/06; A01N 37/46; A01P 21/00; C05C 11/00

(86) International application number:
PCT/KR2024/005982

(87) International publication number:
WO 2024/228572 (07.11.2024 Gazette 2024/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  04.05.2023  KR 20230058742

(71) Applicant: CJ CheilJedang Corporation
Seoul 04560 (KR)

(72) Inventors:
• OH, Youngjoo
  Seoul 04560 (KR)
• KIM, Gyuree
  Seoul 04560 (KR)
• KANG, Yuna
  Seoul 04560 (KR)
• SON, Ju Yeon
  Seoul 04560 (KR)

(74) Representative: Meissner Bolte Partnerschaft mbB
Patentanwälte Rechtsanwälte
Postfach 86 06 24
81633 München (DE)

(54) **COMPOSITION FOR ALLEVIATING COLD STRESS COMPRISING AMINO ACID**

(57)    The present application relates to a composition for alleviating cold stress and/or a composition for promoting plant growth and a use thereof, the composition for alleviating cold stress comprising, as an active ingredient, at least one amino acid selected from the group consisting of alanine, asparagine, aspartic acid, glutamine, glycine, histidine, isoleucine, leucine, methionine, glutamic acid, phenylalanine, serine, threonine, arginine, proline, lysine, valine, and tryptophan.

【FIG. 7】

**Description**

[TECHNICAL FIELD]

Cross-reference to related application(s)

The present application claims the benefit of the priority based on Korean Patent Application No. 10-2023-0058742 filed on May 4, 2023, and the entire contents disclosed in the documents of the corresponding Korean patent application are incorporated as a part in the present description.

The present application relates to an amino acid having efficacy for alleviating cold stress and/or a use thereof.

[BACKGROUND ART]

Due to climate warming phenomena, climate volatility is increasing, and meteorological disaster phenomena such as heat waves, droughts, cold waves, torrential downpours, and typhoons are frequently occurring, and the decrease in productivity of crops caused by these is a global problem, and it is urgent to prepare its countermeasures. Among unpredictable meteorological disasters, cold damage, sudden low temperatures are closely related to the decrease in productivity of crops as they not only inhibit growth of plants, but also make fertilization impossible. Rapid recovery of plants after cold damage is an important point in recovering the decrease in productivity due to meteorological disasters, and there is a lot of demand for products with efficacy of alleviating cold stress for this.

Currently, in the fertilizer market, the need for sustainable eco-friendly products which can replace chemical fertilizers and agrochemicals is increasing due to worsening cultivation environment and saturation of chemical fertilizer usage, and reflecting this, products based on various eco-friendly materials are being released. Amino acids are essential substances for growth and development of plants, and are one of main substances that can be used as a raw material of a growth promoter. The present inventors have selected amino acids having efficacy of alleviating cold stress, which enable normal growth of crops in a cold stress environment, and can overcome decreased production.

[PRIOR ART]

(PATENT DOCUMENT 1) US 2018-0014536 A1

[DISCLOSURE]

[TECHNICAL PROBLEM]

An object of the present application is to provide a composition for alleviating cold stress comprising an amino acid as an active ingredient.

Another object of the present application is to provide a composition for promoting growth of plants comprising the amino acid or the composition for alleviating cold stress.

Other object of the present application is to provide a fertilizer composition comprising the amino acid, the composition for alleviating cold stress, and/or the composition for promoting growth of plants.

Other object of the present application is to provide an agrochemical composition comprising the amino acid, the composition for alleviating cold stress, and/or the composition for promoting growth of plants.

Other object of the present application is to provide a method for cultivating plants, a method for promoting growth of plants, a method for alleviating cold stress of plants, and/or a method for enhancing resistance to cold stress of plants, comprising treating the amino acid, the composition for alleviating cold stress, and/or the composition for promoting growth of plants.

Other object of the present application is to provide a use of the amino acid for using in alleviating cold stress and/or promoting growth of plants.

Other object of the present application is to provide a use of the amino acid for using in preparation of a composition for alleviating cold stress, a composition for promoting growth of plants, a fertilizer composition, and/or an agrochemical composition.

[TECHNICAL SOLUTION]

This will be described in detail as follows. On the other hand, each description and embodiment disclosed in the present application may be applied to each other description and embodiment. In other words, all combinations of various elements disclosed in the present application fall within the scope of the present application. In addition, it cannot be seen that the scope of the present application is limited by the detailed description described below. Furthermore, those skilled in the art can recognize or confirm many equivalents to specific aspects of the present application described in the present application using only a common experiment. In addition, these equivalents are intended to be included in the present application.

Hereinafter, the present application will be described in more detail.

**Amino acids**

The amino acids provided in the present application may be at least one (for example, one or more kinds, 2 or more kinds, 3 or more kinds, 4 or more kinds, 5 or more kinds, 6 or more kinds, 7 or more kinds, 8 or more kinds, 9 or more kinds, 10 or more kinds, 11 or more kinds, 12 or more kinds, 13 or more kinds, 14 or more kinds, 15 or more kinds, 16 or more kinds, 17 or more kinds, 18 or more kinds, or 19 or more kinds, or, 1 kind, 2 kinds, 3 kinds, 4 kinds, 5 kinds, 6 kinds, 7 kinds, 8 kinds, 9 kinds, 10 kinds, 11 kinds, 12 kinds, 13 kinds, 14 kinds, 15 kinds, 16 kinds, 17 kinds, 18 kinds, 19 kinds, or 20 kinds) amino acid selected from the group consisting of arginine (Arg), histidine (His), lysine (Lys), aspartic acid (Asp), glutamic acid (Glu), serine (S), threonine (Thr), asparagine (Asp), glutamine (Gln), cysteine (Cys), glycine (Gly), proline (Pro), alanine (Ala), valine (Val), isoleucine (Ile), leucine (Leu), methionine(Met), phenylalanine(Phe), tyrosine (Tyr), and tryptophan (Trp) or a salt thereof.

In the present description, "amino acid" may be a term that refers to an amino acid, a salt thereof, or all of them, and may mean an amino acid, a salt thereof, or all of them, except cases where each is separately used specifically.

In the present description, "at least one kind" of amino acid may include cases where the amino acid is used alone or at least two kinds of amino acids are used in combination.

In the present description, that the amino acid is used "alone" may mean that it is not used in combination with any other kind of amino acid other than the amino acid.

In the present description, "at least 2 kinds" of amino acids may include cases where at least 2 kinds, at least 3 kinds, at least 4 kinds, and the like, of amino acids are used in combination.

Herein, a salt of an amino acid may mean a physiologically acceptable salt among salts which are substances in which a cation and an anion are combined by electrostatic attraction, and for example, may mean an agrochemically acceptable salt and/or a salt applicable for plant cultivation. For example, the salt may be at least one selected from the group consisting of metal salts, salts with organic bases, salts with inorganic bases, salts with organic acids and the like. In one embodiment, the metal salt may be at least one selected from the group consisting of alkali metal salts (sodium salt, potassium salt, etc.), alkali earth metal salts (calcium salt, magnesium salt, barium salt, etc.), aluminum salts and the like; and the salt with organic bases may be at least one selected from the group consisting of salts with triethylamine, pyridine, picoline, 2,6-lutidine, ethanolamine, diethanolamine, triethanolamine, cyclohexylamine, dicyclohexylamine, N,N-dibenzylethylenediamine, and the like; and the salts with inorganic acids may be at least one selected from the group consisting of hydrochloric acid, hydrobromic acid, nitric acid, sulfuric acid, phosphoric acid and the like; and the salt with organic acids may be at least one selected from the group consisting of salts with formic acid, acetic acid, trifluoroacetic acid, phthalic acid, fumaric acid, oxalic acid, tartaric acid, maleic acid, citric acid, succinic acid, methane sulfonic acid, benzene sulfonic acid, p-toluene sulfonic acid, and the like.

In one embodiment, a salt of histidine may be hydrochloride of histidine (His-HCl), and a salt of glutamic acid may be a sodium salt of glutamic acid (sodium glutamate, MSG, monosodium glutamate), and a salt of lysine may be hydrochloride of lysine (Lys-HCl).

The present application has confirmed that there is efficacy of alleviating cold stress and/or efficacy of promoting growth of plants, when the amino acid is treated alone or in a combination of at least 2 kinds, and therefore, suggests the activity of alleviating cold stress and/or the activity of promoting growth of plants of the following amino acids.

In one embodiment, the amino acid may be any one selected from the group consisting of alanine, asparagine, aspartic acid, glutamine, glycine, histidine, isoleucine, leucine, glutamic acid, phenylalanine, serine and threonine.

In one embodiment, the amino acid may be any one selected from the group consisting of alanine, glutamine, histidine, isoleucine, phenylalanine, serine and threonine.

In one embodiment, the amino acid may be any one selected from the group consisting of asparagine, isoleucine, leucine, serine and threonine.

In one embodiment, the amino acid may be any one selected from the group consisting of alanine, histidine, glutamine, glutamic acid.

When the amino acid is any one selected from the group consisting of alanine, asparagine, aspartic acid, glutamine, glycine, histidine, isoleucine, leucine, glutamic acid, phenylalanine, serine and threonine, the effect of alleviating cold stress and/or the effect of promoting growth of plants may be further excellent.

In one embodiment, the amino acid may be,

(1) a combination of at least 2 kinds selected from the group consisting of alanine, asparagine, aspartic acid, glutamine, glycine, histidine, isoleucine, leucine, methionine, glutamic acid, phenylalanine, serine and threonine; or
(2) a combination of (i) at least one kind selected from the group consisting of alanine, asparagine, aspartic acid, glutamine, glycine, histidine, isoleucine, leucine, methionine, glutamic acid, phenylalanine, serine and threonine, and (ii) at least one kind selected from the group consisting of arginine and proline.

In one embodiment, the amino acid may be,

(1) a combination of at least 2 kinds selected from the group consisting of alanine, glutamine, histidine, isoleucine, glutamic acid, phenylalanine, serine and threonine; or
(2) a combination of (i) at least one kind selected from the group consisting of alanine, glutamine, histidine, isoleucine, glutamic acid, phenylalanine, serine and threonine, and (ii) at least one kind selected from the group consisting of arginine and proline.

Then, in one embodiment, the combination of amino acids may not comprise threonine and histidine.

In one embodiment, the amino acid may be,

(1) a combination of at least 2 kinds selected from the group consisting of alanine, glutamine, histidine, and glutamic acid; or
(2) a combination of (i) at least one kind selected from the group consisting of alanine, glutamine, histidine, and glutamic acid, and (ii) at least one kind selected from the group consisting of arginine and proline.

In one embodiment, the amino acid may be at least one kind of combination selected from the group consisting of,

(1) a combination of alanine; and at least one kind selected from the group consisting of arginine, glutamine, glutamic acid and proline;
(2) a combination of arginine; and at least one kind selected from the group consisting of histidine, glutamine, and glutamic acid;
(3) a combination of histidine; and at least one kind selected from the group consisting of glutamine and glutamic acid;
(4) a combination of glutamine and proline; and
(5) a combination of glutamic acid and proline.

In one embodiment, the amino acid may be,

(1) a combination of alanine and arginine, glutamine, glutamic acid or proline;
(2) a combination of arginine and histidine, glutamine, or glutamic acid;
(3) a combination of histidine and glutamine or glutamic acid;
(4) a combination of glutamine and proline; or
(5) a combination of glutamic acid and proline.

In one embodiment, the amino acid may be at least one kind of combination selected from the group consisting of a combination of alanine and glutamic acid, a combination of alanine and proline, a combination of arginine and histidine, a combination of arginine and glutamine, a combination of histidine and glutamine, a combination of histidine and glutamic acid, and a combination of glutamic acid and proline.

In one embodiment, the amino acid may be a combination of alanine and glutamic acid, a combination of alanine and proline, a combination of arginine and histidine, a combination of arginine and glutamine, a combination of histidine and glutamine, a combination of histidine and glutamic acid, or a combination of glutamic acid and proline.

When the amino acid is (1) a combination of at least 2 kinds selected from the group consisting of alanine, asparagine, aspartic acid, glutamine, glycine, histidine, isoleucine, leucine, methionine, glutamic acid, phenylalanine, serine and threonine; or
(2) a combination of (i) at least one kind selected from the group consisting of alanine, asparagine, aspartic acid, glutamine, glycine, histidine, isoleucine, leucine, methionine, glutamic acid, phenylalanine, serine and threonine, and (ii) at least one kind selected from the group consisting of arginine and proline, the effect of alleviating cold stress and/or the effect of promoting growth of plants may be further excellent.

In one embodiment, the amino acid may be a combination of at least two kinds selected from the group consisting of arginine, histidine, glutamic acid, lysine, valine, and tryptophan.

In one embodiment, the amino acid may be a combination of

(1) arginine and histidine; and

(2) at least one kind selected from the group consisting of glutamic acid, lysine, valine and tryptophan.

In one embodiment, the amino acid may be a combination of

(1) arginine, histidine and glutamic acid; and
(2) at least one kind selected from the group consisting of lysine, valine and tryptophan.

In one embodiment, the amino acid may be at least one kind selected from the group consisting of (1) to (5) below:

(1) a combination of arginine, histidine, and glutamic acid;
(2) a combination of arginine, histidine, lysine;
(3) a combination of arginine, histidine, glutamic acid, lysine;
(4) a combination of arginine, histidine, glutamic acid, valine; and
(5) a combination of arginine, histidine, glutamic acid, valine, tryptophan.

In one embodiment, the amino acid may be a combination of arginine, histidine, and glutamic acid.
In one embodiment, the amino acid may be a combination of arginine, histidine, and lysine.
In one embodiment, the amino acid may be a combination of arginine, histidine, glutamic acid, and lysine.
In one embodiment, the amino acid may be a combination of arginine, histidine, glutamic acid, and valine.
In one embodiment, the amino acid may be a combination of arginine, histidine, glutamic acid, valine, and tryptophan.
When the amino acid is a combination of at least 2 kinds selected from the group consisting of arginine, histidine, glutamic acid, lysine, valine, and tryptophan, the effect of alleviating cold stress and/or the effect of promoting growth of plants may be further excellent.
When at least two kinds of the amino acids are used in combination, the mixing ratio of each amino acid may be a ratio of 1: 0.01 to 100, 1: 0.1 to 10, 1: 4 to 4: 1, 1: 4 to 3: 1, 1: 4 to 2: 1, 1: 4 to 1: 1, 1: 4 to 1: 2, 1: 4 to 1: 3, 1: 3 to 4: 1, 1: 3 to 3: 1, 1: 3 to 2: 1, 1: 3 to 1: 1, 1: 3 to 2: 1, 1: 2 to 4: 1, 1: 2 to 3: 1, 1: 2 to 2: 1, 1: 2 to 1: 1, 1: 1 to 4: 1, 1: 1 to 3: 1, 1: 1 to 2: 1, or 1: 1 by weight, but not limited thereto.
When at least two kinds of the amino acids are used in combination, the mixing ratio of each amino acid may be a ratio of 1: 0.01 to 100, 1: 0.1 to 10, 1: 4 to 4: 1, 1: 4 to 3: 1, 1: 4 to 2: 1, 1: 4 to 1: 1, 1: 4 to 1: 2, 1: 4 to 1: 3, 1: 3 to 4: 1, 1: 3 to 3: 1, 1: 3 to 2: 1, 1: 3 to 1: 1, 1: 3 to 2: 1, 1: 2 to 4: 1, 1: 2 to 3: 1, 1: 2 to 2: 1, 1: 2 to 1: 1, 1: 1 to 4: 1, 1: 1 to 3: 1, 1: 1 to 2: 1, or 1: 1 by weight, but not limited thereto.
When at least two kinds of the amino acids are used in combination, the mixing ratio of each amino acid, based on arginine of 1 part by weight,

may be histidine of 0.1 to 5 parts by weight, 0.1 to 4 parts by weight, 0.1 to 3 parts by weight, 0.1 to 2 parts by weight, 0.1 to 1.5 parts by weight, 0.1 to 1.2 parts by weight, 0.1 to 1 parts by weight, 0.5 to 5 parts by weight, 0.5 to 4 parts by weight, 0.5 to 3 parts by weight, 0.5 to 2 parts by weight, 0.5 to 1.5 parts by weight, 0.5 to 1.2 parts by weight, 0.5 to 1 parts by weight, 1 to 5 parts by weight, 1 to 4 parts by weight, 1 to 3 parts by weight, 1 to 2 parts by weight, 1 to 1.5 parts by weight, or 1 to 1.2 parts by weight, and
may be glutamic acid of 0.1 to 5 parts by weight, 0.1 to 4 parts by weight, 0.1 to 3 parts by weight, 0.1 to 2.67 parts by weight, 0.1 to 2.5 parts by weight, 0.1 to 2.4 parts by weight, 0.1 to 2 parts by weight, 0.1 to 1 parts by weight, 0.5 to 5 parts by weight, 0.5 to 4 parts by weight, 0.5 to 3 parts by weight, 0.5 to 2.67 parts by weight, 0.5 to 2.5 parts by weight, 0.5 to 2.4 parts by weight, 0.5 to 2 parts by weight, 0.5 to 1 parts by weight, 1 to 5 parts by weight, 1 to 4 parts by weight, 1 to 3 parts by weight, 1 to 2.67 parts by weight, 1 to 2.5 parts by weight, 1 to 2.4 parts by weight, 1 to 2 parts by weight, and
may be lysine of 0.1 to 5 parts by weight, 0.1 to 4 parts by weight, 0.1 to 3 parts by weight, 0.1 to 2.67 parts by weight, 0.1 to 2.5 parts by weight, 0.1 to 2.4 parts by weight, 0.1 to 2 parts by weight, 0.1 to 1 parts by weight, 0.5 to 5 parts by weight, 0.5 to 4 parts by weight, 0.5 to 3 parts by weight, 0.5 to 2.67 parts by weight, 0.5 to 2.5 parts by weight, 0.5 to 2.4 parts by weight, 0.5 to 2 parts by weight, 0.5 to 1 parts by weight, 1 to 5 parts by weight, 1 to 4 parts by weight, 1 to 3 parts by weight, 1 to 2.67 parts by weight, 1 to 2.5 parts by weight, 1 to 2.4 parts by weight, 1 to 2 parts by weight, and
may be valine of 0.01 to 5 parts by weight, 0.01 to 4 parts by weight, 0.01 to 3 parts by weight, 0.01 to 2 parts by weight, 0.01 to 1 parts by weight, 0.01 to 0.5 parts by weight, 0.01 to 0.4 parts by weight, 0.01 to 0.1 parts by weight, 0.1 to 5 parts by weight, 0.1 to 4 parts by weight, 0.1 to 3 parts by weight, 0.1 to 2 parts by weight, 0.1 to 1 parts by weight, 0.1 to 0.5 parts by weight, 0.1 to 0.4 parts by weight, and
may be tryptophan of 0.01 to 5 parts by weight, 0.01 to 4 parts by weight, 0.01 to 3 parts by weight, 0.01 to 2 parts by weight, 0.01 to 1 parts by weight, 0.01 to 0.5 parts by weight, 0.01 to 0.4 parts by weight, 0.01 to 0.1 parts by weight, 0.1 to 5 parts by weight, 0.1 to 4 parts by weight, 0.1 to 3 parts by weight, 0.1 to 2 parts by weight, 0.1 to 1 parts by weight, 0.1 to 0.5 parts by weight, 0.1 to 0.4 parts by weight, but not limited thereto.

## Compositions and methods

One aspect confirms that there is efficacy of alleviating cold stress and/or efficacy for promoting growth of plants of the amino acid, thereby providing a composition for alleviating cold stress and/or a composition for promoting growth of plants, comprising the amino acid.

Another aspect provides a use of the amino acid for using in alleviation of cold stress and/or promotion of growth of plants.

Other aspect provides a use of the amino acid for using in preparation of a composition for alleviating cold stress and/or a composition for promoting growth of plants.

The amino acid is as described above.

In one embodiment, the composition may comprise the amino acid alone or in combination of at least two kinds.

In one embodiment, the composition may be an amino acid aqueous solution. The amino acid aqueous solution may consist of the amino acid and water.

In the present description, "cold stress" may mean damage to plant growth, flowering time, seed production, and the like, due to a low temperature.

In the present application, the cold stress may be induced by a temperature of 20°C or less, 19°C or less, 18°C or less, 17°C or less, 16°C or less, 15°C or less, 13°C or less, 12°C or less, 11°C or less, 10°C or less, -50 to 20°C, -50 to 17°C, -50 to 15°C, -50 to 13°C, -50 to 10°C, -50 to 7C, -50 to 5°C, -50 to 3°C, -50 to 0°C, -40 to 20°C, -40 to 17°C, -40 to 15°C, -40 to 13°C, -40 to 10°C, -40 to 7C, -40 to 5°C, -40 to 3C, -40 to 0°C, -30 to 20°C, -30 to 17°C, -30 to 15°C, -30 to 13°C, -30 to 10°C, -30 to 7°C, -30 to 5°C, -30 to 3°C, -30 to 0°C, -20 to 20°C, -20 to 17°C, -20 to 15°C, -20 to 13°C, -20 to 10°C, -20 to 7°C, -20 to 5°C, -20 to 3°C, -20 to 0°C, -10 to 20°C, -10 to 17°C, -10 to 15°C, -10 to 13°C, -10 to 10°C, -10 to 7C, -10 to 5°C, -10 to 3C, -10 to 0°C, 0 to 20°C, 0 to 17°C, 0 to 15°C, 0 to 13°C, 0 to 10°C, 0 to 7°C, 0 to 5°C, 0 to 3C, 5 to 20°C, 5 to 17°C, 5 to 15°C, 5 to 13°C, 5 to 10°C, 5 to 7°C, 10 to 20°C, 10 to 17°C, 10 to 15°C, 10 to 13°C, 13 to 20°C, 13 to 17°C, or 13 to 15°C, but not limited thereto.

In the present application, when the composition for alleviating cold stress comprising the amino acid is treated to plants to which cold stress is induced, the effect of alleviating cold stress may be exhibited.

In one embodiment, plants to which cold stress is induced may exhibit increased chlorosis, or reduced growth and development of plants, or accumulated anthocyanins or accumulated reactive oxygen species (ROS), or the like, by inhibition of cell division, inhibition of growth and development of plants, inhibition of photosynthesis, promotion of aging, inhibition of fruit formation and/or development, and changes in metabolites due to phenotypic changes.

In one embodiment, the reduced growth and development of plants may be reduction in the aerial part fresh weight, aerial part length, underground part fresh weight, and/or underground part length.

In one embodiment, the composition for alleviating cold stress may reduce chlorosis of plants or increase growth and development of plants, or reduce accumulation of anthocyanins or reactive oxygen species, when it is treated to plants to which cold stress is induced.

In one embodiment, the increased of growth and development of plants may be an increase in the aerial part fresh weight, aerial part length, underground part fresh weight, and/or underground part length.

In one embodiment, the composition for promoting growth of plants may reduce and/or prevent chlorosis of plants, or increase growth and development of plants, and/or reduce and/or prevent accumulation of anthocyanins or reactive oxygen species, to promote growth of plants, when it is treated to plants to which cold stress is induced or plants to which cold stress is not induced.

The concentration of the amino acid comprised in the composition for alleviating cold stress or composition for promoting growth of plants may be 0.001 to 99.99%(w/w), 0.001 to 99.9%(w/w), 0.001 to 99%(w/w), 0.001 to 90%(w/w), 0.001 to 80%(w/w), 0.001 to 70%(w/w), 0.001 to 60%(w/w), 0.001 to 50%(w/w), 0.001 to 40%(w/w), 0.001 to 30%(w/w), 0.001 to 20%(w/w), 0.001 to 10%(w/w), 0.001 to 5%(w/w), 0.001 to 1%(w/w), 0.001 to 0.5%(w/w), 0.001 to 0.05%(w/w), 0.001 to 0.005%(w/w), 0.01 to 99.99%(w/w), 0.01 to 99.9%(w/w), 0.01 to 99%(w/w), 0.01 to 90%(w/w), 0.01 to 80%(w/w), 0.01 to 70%(w/w), 0.01 to 60%(w/w), 0.01 to 50%(w/w), 0.01 to 40%(w/w), 0.01 to 30%(w/w), 0.01 to 20%(w/w), 0.01 to 10%(w/w), 0.01 to 5%(w/w), 0.01 to 1%(w/w), 0.01 to 0.5%(w/w), 0.01 to 0.05%(w/w), 0.1 to 99.99%(w/w), 0.1 to 99.9% (w/w), 0.1 to 99%(w/w), 0.1 to 90%(w/w), 0.1 to 80%(w/w), 0.1 to 70%(w/w), 0.1 to 60%(w/w), 0.1 to 50%(w/w), 0.1 to 40% (w/w), 0.1 to 30%(w/w), 0.1 to 20%(w/w), 0.1 to 10%(w/w), 0.1 to 5%(w/w), 0.1 to 1%(w/w), 0.1 to 0.5%(w/w), 1 to 99.99% (w/w), 1 to 99.9%(w/w), 1 to 99%(w/w), 1 to 90%(w/w), 1 to 80%(w/w), 1 to 70%(w/w), 1 to 60%(w/w), 1 to 50%(w/w), 1 to 40%(w/w), 1 to 30%(w/w), 1 to 20%(w/w), 1 to 23.5%(w/w), 1 to 5%(w/w), 5 to 99.99%(w/w), 5 to 99.9%(w/w), 5 to 99% (w/w), 5 to 90%(w/w), 5 to 80%(w/w), 5 to 70%(w/w), 5 to 60%(w/w), 5 to 50%(w/w), 5 to 40%(w/w), 5 to 30%(w/w), 5 to 25% (w/w), 5 to 23.5%(w/w), 5 to 20%(w/w), 10 to 99.99%(w/w), 10 to 99.9%(w/w), 10 to 99%(w/w), 10 to 90%(w/w), 10 to 80% (w/w), 10 to 70%(w/w), 10 to 60%(w/w), 10 to 50%(w/w), 10 to 40%(w/w), 10 to 30%(w/w), 10 to 25%(w/w), 10 to 23.5% (w/w), 10 to 20%(w/w), 20 to 99.99%(w/w), 20 to 99.9%(w/w), 20 to 99%(w/w), 20 to 90%(w/w), 20 to 80%(w/w), 20 to 70%(w/w), 20 to 60%(w/w), 20 to 50%(w/w), 20 to 40%(w/w), 20 to 30%(w/w), 20 to 25%(w/w), 20 to 23.5%(w/w), 22 to 99.99% (w/w), 22 to 99.9%(w/w), 22 to 99%(w/w), 22 to 90%(w/w), 22 to 80%(w/w), 22 to 70%(w/w), 22 to 60%(w/w), 22 to 50% (w/w), 22 to 40%(w/w), 22 to 30%(w/w), 22 to 25%(w/w), or 22 to 23.5%(w/w) based on the weight, but not limited thereto.

The composition for alleviating cold stress or composition for promoting growth of plants may be suitably diluted and used, and for example, it may be used by being diluted by 1 to 10000 folds, 1 to 7500 folds, 1 to 5000 folds, 1 to 2500 folds, 1 to 1000 folds, 1 to 900 folds, 1 to 800 folds, 1 to 700 folds, 1 to 600 folds, 1 to 500 folds, 1 to 400 folds, 1 to 300 folds, 1 to 200 folds, 1 to 100 folds, 10 to 10000 folds, 10 to 7500 folds, 10 to 5000 folds, 10 to 2500 folds, 10 to 1000 folds, 10 to 900 folds, 10 to 800 folds, 10 to 700 folds, 10 to 600 folds, 10 to 500 folds, 10 to 400 folds, 10 to 300 folds, 10 to 200 folds, 10 to 100 folds, 50 to 10000 folds, 50 to 7500 folds, 50 to 5000 folds, 50 to 2500 folds, 50 to 1000 folds, 50 to 900 folds, 50 to 800 folds, 50 to 700 folds, 50 to 600 folds, 50 to 500 folds, 50 to 400 folds, 50 to 300 folds, 50 to 200 folds, 50 to 100 folds, 100 to 10000 folds, 100 to 7500 folds, 100 to 5000 folds, 100 to 2500 folds, 100 to 1000 folds, 100 to 900 folds, 100 to 800 folds, 100 to 700 folds, 100 to 600 folds, 100 to 500 folds, 100 to 400 folds, 100 to 300 folds, or 100 to 200 folds. In one specific embodiment, the composition may be used by being diluted by 500 folds. The composition may be diluted with water or the like, but not limited thereto.

When the composition for alleviating cold stress or composition for promoting growth of plants is diluted and used, the concentration of the amino acid comprised in the composition may be 0.0001 to 5%(w/w), 0.0001 to 4%(w/w), 0.0001 to 3%(w/w), 0.0001 to 1%(w/w), 0.0001 to 0.5%(w/w), 0.0001 to 0.01%(w/w), 0.0001 to 0.05%(w/w), 0.0001 to 0.047%(w/w), 0.0001 to 0.01%(w/w), 0.0001 to 0.009%(w/w), 0.0001 to 0.008%(w/w), 0.0001 to 0.007%(w/w), 0.0001 to 0.006%(w/w), 0.0001 to 0.005%(w/w), 0.0005 to 5%(w/w), 0.0005 to 4%(w/w), 0.0005 to 3%(w/w), 0.0005 to 1%(w/w), 0.0005 to 0.5% (w/w), 0.0005 to 0.01%(w/w), 0.0005 to 0.05%(w/w), 0.0005 to 0.047%(w/w), 0.0005 to 0.01%(w/w), 0.0005 to 0.009% (w/w), 0.0005 to 0.008%(w/w), 0.0005 to 0.007%(w/w), 0.0005 to 0.006%(w/w), 0.0005 to 0.005%(w/w), 0.001 to 5% (w/w), 0.001 to 4%(w/w), 0.001 to 3%(w/w), 0.001 to 1%(w/w), 0.001 to 0.5%(w/w), 0.001 to 0.047%(w/w), 0.001 to 0.01% (w/w), 0.001 to 0.05%(w/w), 0.001 to 0.01%(w/w), 0.001 to 0.009%(w/w), 0.001 to 0.008%(w/w), 0.001 to 0.007%(w/w), 0.001 to 0.006%(w/w), 0.001 to 0.005%(w/w), 0.005 to 5%(w/w), 0.005 to 4%(w/w), 0.005 to 3%(w/w), 0.005 to 1%(w/w), 0.005 to 0.5%(w/w), 0.005 to 0.01%(w/w), 0.005 to 0.05%(w/w), 0.005 to 0.01%(w/w), 0.005 to 0.009%(w/w), 0.005 to 0.008%(w/w), 0.005 to 0.007%(w/w), 0.01 to 5%(w/w), 0.01 to 4%(w/w), 0.01 to 3%(w/w), 0.01 to 1%(w/w), 0.01 to 0.5% (w/w), 0.01 to 0.047%(w/w), 0.01 to 0.05%(w/w), 0.02 to 5%(w/w), 0.02 to 4%(w/w), 0.02 to 3%(w/w), 0.02 to 1%(w/w), 0.02 to 0.5%(w/w), 0.02 to 0.047%(w/w), 0.02 to 0.01%(w/w), 0.02 to 0.05%(w/w), 0.03 to 5%(w/w), 0.03 to 4%(w/w), 0.03 to 3% (w/w), 0.03 to 1%(w/w), 0.03 to 0.5%(w/w), 0.03 to 0.01%(w/w), 0.03 to 0.05%(w/w), 0.03 to 0.047%(w/w), 0.04 to 5% (w/w), 0.04 to 4%(w/w), 0.04 to 3%(w/w), 0.04 to 1%(w/w), 0.04 to 0.5%(w/w), 0.04 to 0.01%(w/w), 0.04 to 0.05%(w/w), 0.04 to 0.047%(w/w), 0.044 to 5%(w/w), 0.044 to 4%(w/w), 0.044 to 3%(w/w), 0.044 to 1%(w/w), 0.044 to 0.5%(w/w), 0.044 to 0.01%(w/w), or 0.044 to 0.05%(w/w), based on the weight, but not limited thereto.

In the present description, the term "plant" refers to all physical parts of a plant, including at least one kind of part selected from the group consisting of seeds, seedlings, saplings, roots, tubers, stems, stalks, foliage, and fruits.

The plant may be a plant to which cold stress is induced, or a normal plant to which cold stress is not induced.

There are no special restrictions on the plant to which the composition for alleviating cold stress or composition for promoting growth of plants can be applied, and for example, it may be at least one kind of plant selected from the group consisting of plants of the family of Cucurbitaceae, plants of the family of Asteraceae, plants of the family of Brassicaceae (or family of Cruciferae), plants of the family of Fabaceae, plants of the family of Rosaceae and plants of the family of Solanaceae, but not limited thereto.

The plants of the family of Cucurbitaceae may be plants of the genus of Cucumis (for example, *Cucumis sativus, Cucumis melo* ssp. *agrestis var. makuw, Cucumis melo, Cucumis melo, var. conomon.,* etc.), plants of the genus of Citrullus (for example, *Citrullus lanatus,* etc.), plants of the genus of Cucurbita (for example, *Cucurbita (Cucurbita moschata, Cucurbita maxima, Cucurbita ficifolia,* etc.), etc.), plants of the genus of *Luffa* (for example, *Luffa cylindrica (L.) M.Roem.,* etc.) plants of the genus of Benincasa (for example, *Benincasa cerifera,* etc.), plants of the genus of Momordica (for example, *Momordica charantia,* etc.) or the like, but not limited thereto.

The plants of the family of Asteraceae may be plants of the genus of Raphanus (for example, *Raphanus sativus var. Longipinnatus, Raphanus raphanistrum, Raphanus raphanistrum* subsp. *sativus,* etc.), plants of the genus of Lactuca (for example, *Lactuca indica, Lactuca raddeana, Lactuca sativa, Lactuca serriola, Lactuca triangulata* , etc.) or the like, but not limited thereto.

The plants of the family of Brassicaceae may be plants of the genus of Arabidopsis (for example, *Arabidopsis thaliana,* etc.), plants of the genus of Brassica (for example, *Brassica oleracea, Brassica rapa* subsp. *pekinensis, Brassica carinata, Brassica juncea* var. *juncea, Brassica rapa, Brassica rapa* subsp. *chinensis, Brassica oleracea var. capitata, Brassica napus, Brassica campestris L., Brassica nigra, Brassica oleracea* var. *viridis, Brassica oleracea* Alboglabra Group, *Brassica oleracea var. botrytis, Brassica oleracea var. gemmifera, Brassica oleracea* Gongylodes Group, *Brassica oleracea var. italica, Brassica oleracea* var. sabauda, *Brassica oleracea* var. botrytis, *Brassica oleracea var. sabellica,* etc.), or the like, but not limited thereto.

The plants of the family of Fabaceae may be plants of the genus of Phaseolus (for example, *Phaseolus vulgaris,*

*Phaseolus lunatus, Phaseolus coccineus,* etc.), plants of the genus of Glycine (for example, beans (or soybeans) (*Glycine max*), *Glycine soja,* etc.), plants of the genus of Pisum (for example, *Pisum sativum,* etc.), plants of the genus of Arachis (for example, *Arachis hypogaea,* etc.), plants of the genus of Euchresta (for example, *Euchresta japonica* Hook. f. ex Regel, etc.), plants of the genus of Rhynchosia (for example, *Rhynchosia volubilis* Lour, *Rhynchosia acuminatifolia* Makino, etc.), plants of the genus of Lens (for example, *Lens culinaris,* or lentil bean, etc.) or the like, but not limited thereto.

The plants of the family of Rosaceae may be plants of the genus of Fragaria (for example, *Fragaria × ananassa,* etc.), plants of the genus of Rubus (for example, *Rubus crataegifolius,* etc.) or the like, but not limited thereto.

The plants of the family of Solanaceae may be plants of the genus of Solanum (for example, *Solanum tuberosum, Solanum melongena, Solanum quitoense, Solanum betaceum, Solanum dulcamara, Solanum lycopersicum, Solanum muricatum,* etc.), plants of the genus of Nicotiana (for example, *Nicotina tabacum,* etc.), plants of the genus of Capsicum (for example, *Capsicum annuum,* specifically, chilli pepper (*Capsicum annuum L. var.acuminatum*), sweet or vell pepper (*Capsicum annuum* L. *var.grossum*), cone pepper (*Capsicum annuum L. var.conoides*), cherry pepper (*Capsicum annuum L. var.cerasiforme*), red cluster pepper (*Capsicum annuum L. var.fasciculatum*), long pepper (*Capsicum annuum L. var.longum*), etc.) or the like, but not limited thereto.

There are no special restrictions on the part to which the composition for alleviating cold stress or composition for promoting growth of plants can be applied, and for example, it may be at least one kind selected from the group consisting of whole plants, seeds, roots, leaves, stems, flowers, and the like.

In one embodiment, the composition may be directly treated to a root of a plant, or treated to soil, media or the like in which a plant grows.

Otherwise, in one embodiment, the composition may be treated to the upper surfaces of leaves and/or the lower surfaces of leaves by a method of foliar application or foliar spraying or the like, but not limited thereto.

The method of treatment of the composition for alleviating cold stress or composition for promoting growth of plants may be spraying on the surface of soil around plants, or mixing or drench treating in soil, and may be used by directly spraying or distributing to stems, leaves or branches of plants, or spraying or soaking to seeds of plants, but not limited thereto.

The amount of the composition for alleviating cold stress or composition for promoting growth of plants applied to plants, may be about 0.1 to 1000ml, 0.1 to 800ml, 0.1 to 600ml, 0.1 to 500ml, 0.1 to 400ml, 0.1 to 200ml, 0.1 to 100ml, 0.1 to 50ml, 0.1 to 10ml, 0.1 to 5ml, 0.1 to 1ml, 1 to 1000ml, 1 to 800ml, 1 to 600ml, 1 to 500ml, 1 to 400ml, 1 to 200ml, 1 to 100ml, 1 to 50ml, 1 to 10ml, 1 to 5ml, 10 to 1000ml, 10 to 800ml, 10 to 600ml, 10 to 500ml, 10 to 400ml, 10 to 200ml, 10 to 100ml, 10 to 50ml, 50 to 1000ml, 50 to 800ml, 50 to 600ml, 50 to 500ml, 50 to 400ml, 50 to 200ml, 50 to 100ml, 100 to 1000ml, 100 to 800ml, 100 to 600ml, 100 to 500ml, 100 to 400ml, or 100 to 200ml at one time, but not limited thereto.

The composition for alleviating cold stress or composition for promoting growth of plants may be treated to plants one time to 20 times, one time to 15 times, one time to 10 times, one time to 9 times, one time to 8 times, one time to 7 times, one time to 6 times, one time to 5 times, one time to 4 times, or one time to 3 times, and may be treated at 1-day intervals, at 2-day intervals, at 3-day intervals, at 5-day intervals, at 7-day (or 1-week) intervals, at 10-day intervals, at 14-day (or 2-week) intervals, at 15-day intervals, at 20-day intervals, at 21-day (or 3-week) intervals, at 25-day intervals, at 28-day (or 4-week) intervals, at 30-day (or 1-month) intervals, at 45-day intervals, or at 60-day (or 2-month) intervals, but not limited thereto.

The composition for alleviating cold stress or composition for promoting growth of plants of the present application, may be a preparation in various kinds of formulations such as a dustable powder, a granule, a wettable powder, a water soluble powder, a water dispersible granule, a water soluble granule, a suspo-emulsion (Suspension concentrate, Emulsion oil in water, Flowable), an emulsifiable concentrate, and the like, and in the preparation, known additives, carriers, and the like may be used.

Other aspect provides a fertilizer composition comprising the amino acid, the composition for alleviating cold stress and/or the composition for promoting growth of plants.

Other aspect provides a use of the amino acid for using in preparation of a fertilizer composition.

In the present description, the term "fertilizer" may mean a substance that causes a chemical change in soil to help plant cultivation, a substance that nourishes a plant, and the like. The fertilizer may comprise at least one (for example, one or more kinds, 2 or more kinds, 3 or more kinds, or one kind, 2 kinds, 3 kinds or 4 kinds) selected from the group consisting of nitrogen, phosphorus, potassium and calcium, but not limited thereto. The fertilizer may be classified into organic fertilizers or inorganic fertilizers. The organic fertilizer may be a vegetable fertilizer or an animal fertilizer. The vegetable fertilizer may be compost, manure, oil cake such as sesame cake, rice bran, humus and the like, and the animal fertilizer may be silkworm pupa meal, bone meal, meat meal, carcass, excreta and the like. The inorganic fertilizer may be a single fertilizer or a composite fertilizer. The single fertilizer may include nitrogenous fertilizers (including urea, ammonium sulfate, ammonium nitrate, ammonium chloride and/or lime nitrogen, etc.), phosphoric fertilizers (including superphosphate lime (single superphosphate), polysuperphosphate lime (triple superphosphate), fused phosphate, and/or fused superphosphate, etc.), potassium fertilizers (including potassium chloride and/or potassium sulfate, etc.), calcareous (calcium) fertilizers (including lime, slacked lime and/or carbonated lime, etc.), siliceous fertilizers (including calcium silicate, etc.) and the like. The composite fertilizer may be a fertilizer comprising at least two or more components selected from the group consisting of nitrogen, phosphorus, potassium, silicic acid and the like.

The fertilizer may further comprise an inorganic element such as sulfur, calcium, magnesia, boron, copper, zinc, manganese, iron, molybdenum, and the like.

The fertilizer may be used in the form of solid fertilizer, particle fertilizer, powder fertilizer, liquid fertilizer, diluted solution fertilizer, or the like, and may be used by being prepared in various formulations such as a powder formation, a particle formulation, and the like. In the preparation, known additives, carriers, and the like may be used.

Other aspect provides an agrochemical composition comprising the amino acid, the composition for alleviating cold stress, and/or the composition for promoting growth of plants.

Other aspect provides a use of the amino acid for using in preparation of an agrochemical composition.

In the present description, the agrochemical may mean disinfectants, insecticides, herbicides, and the like, which are used for control animals and plants such as bacteria, insects, mites, nematodes, viruses, weeds and the like that harm plants (including crops, trees, agricultural products, forest products, and the like), and may refer to drugs used for enhancing or inhibiting physiological functions of crops.

As the agrochemical, commonly known agrochemicals such as disinfectants, insecticides, acaricides, nematocides, herbicides, plant growth regulators, and the like may be used without limitation.

The disinfectant may be inorganic copper compounds such as Bordeaux mixture, copper oxychloride, copper hydroxide, etc., organic copper compounds such as oxine copper, prochloraz copper chloride, etc., inorganic sulfur agents such as lime sulfur, sulfur, etc., organic sulfur agents such as dithiocarbamate series (mancozeb, thiram, etc.), etc., quinone series (dithianon), arylnitrile series (chlorothalonil), and the like, but not limited thereto.

The insecticide may be organic phosphorus series such as diazinon, acephate, chlorpyrifos, fenthion, etc., carbamate series such as methiocarb, thiodicarb, benfuracarb, carbofuran, etc., Bt series such as Bt Aizawai, Bt kurstaki, etc., synthetic pyrethroid series such as etofenprox, neonicotinoid series such as dinotefuran, acetamiprid, thiamethoxam, etc., and the like, but not limited thereto.

The acaricide may be synthetic pyrethroid series such as bifenthrin, acrinathrin, and the like, antibiotic series such as milbemectin, abamectin, etc., organic tin series such as cytin, acytin, fenbutatin oxide, etc., METI series such as acequinocyl, fenazaquin, pyridaben, etc., tetronic acid series such as spirodiclofen, spiromesifen, spirotetramat, etc., and the like, but not limited thereto.

The nematocide may be imicyafos, cadusafos, fosthiazate and the like, but not limited thereto.

The herbicide may be glycine series such as glyphosate, phosphonic acid series such as ammonium glufosinate, and the like, but not limited thereto.

The plant growth regulator may be plant hormone series such as auxin, gibberellin, cytokinin, abscisic acid (ABA), ethylene, brassinosteroid, etc., non-hormone series such as 1-methylcyclopropene, maleic hydrazide, mepiquat chloride, butralin, prohexadione calcium, nitrophenolate, fochlorfenuron, daminozide, diniconazole, inabenfide, iprobenfos, etc., and the like, but not limited thereto.

The additive for preparation of the agrochemical composition is not particularly limited, and an additive commonly used as an agrochemical preparation may be used. For example, in case of the suspo-emulsion, water, an antifoaming agent, and the like may be added, and in case of the emulsifiable concentrate, an organic solvent (oily solvent) and the like may be added, and in case of the water dispersible granule or water soluble granule, water and the like that are contained during granule preparation and then is removed by drying may be added. For preparation of the dustable powder, granule, wettable powder and the like, a carrier may be contained. The carrier is not particularly limited, and a carrier commonly used as an agrochemical preparation may be used. As the carrier, calcium carbonate, calcium sulfate, ammonium sulfate, potassium sulfate, sodium sulfate, sodium benzoate, silicon dioxide, diatomite, apatite, talc, bentonite, pyrophyllite, clay, joint soil, and the like may be exemplified.

Other aspect provides a method for cultivating plants comprising treating the amino acid, the composition for alleviating cold stress and/or the composition for promoting growth of plants to a plant.

Other aspect provides a method for promoting growth of plants comprising treating the amino acid, the composition for alleviating cold stress and/or the composition for promoting growth of plants to a plant.

In one embodiment, the method may be characterized by alleviating cols tress of plants.

In one embodiment, the method may be characterized by enhancing resistance to cold stress of plants.

Other aspect provides a method for alleviating cold stress of plants or a method for enhancing resistance to cold stress of plants, comprising treating the amino acid, the composition for alleviating cold stress and/or the composition for promoting growth of plants to a plant.

In the composition and/or method, the type and concentration of amino acids, applicable plants, treatment capacity, number of treatments, treatment intervals, and the like are as described above.

[ADVANTAGEOUS EFFECTS]

Excellent effects of alleviating cold stress of plants or enhancing resistance to cold stress of plants, and/or promoting growth of plants were confirmed, by treating the composition comprising the amino acid of the present application into plants.

[BRIEF DESCRIPTION OF THE DRAWINGS]

FIG. 1a shows the results of verification of the efficacy of alleviating cold stress for amino acids, and shows the underground part growth and development (root length) of *Arabidopsis thaliana* as a graph.

FIG. 1b shows the results of verification of the efficacy of alleviating cold stress for amino acids, and shows the underground part growth and development (root length) of *Arabidopsis thaliana* as a graph.

FIG. 2 shows the results of verification of the efficacy of alleviating cold stress for amino acids, and shows the relative anthocyanin content as a graph. (absorbance at 530 nm wavelength / g. F.W (gram Fresh Weight))

FIG. 3 shows the results of verification of the efficacy of alleviating cold stress for 6 kinds of amino acids (Ala, Arg, His, Gln, MSG, Pro) and combinations of at least 2 kinds selected therefrom, and shows the aerial part growth and development (Rosette diameter) of *Arabidopsis thaliana* as a graph. The experimental group with a more excellent effect than the control group (DW) in which cold stress is induced is indicated by a white bar, and the experimental group showing a synergistic effect of 2 kinds of amino acids is indicated by a patterned bar.

FIG. 4 shows the results of verification of the efficacy of alleviating cold stress for 6 kinds of amino acids (Ala, Arg, His, Gln, MSG, Pro) and combinations of at least 2 kinds selected therefrom, and shows the relative anthocyanin content as a graph. The experimental group with a more excellent effect than the control group (DW) in which cold stress is induced is indicated by a white bar, and the experimental group showing a synergistic effect of 2 kinds of amino acids is indicated by a patterned bar.

FIG. 5 shows the results of verification of the efficacy of alleviating cold stress of the amino acid compositions (CJ1, CJ2, CJ3, CJ4, CJ5) of the present application, and shows the leaf length of cucumber as a graph.

FIG. 6 shows the results of verification of the efficacy of alleviating cold stress of the amino acid compositions (CJ1, CJ2, CJ3, CJ4, CJ5) of the present application, and shows the leaf width of cucumber as a graph.

FIG. 7 shows the results of verification of the efficacy of alleviating cold stress of the amino acid compositions (CJ1, CJ2, CJ3, CJ4, CJ5) of the present application, and shows the fresh weight of cucumber as a graph.

[MODE FOR INVENTION]

Hereinafter, the present invention will be described in more detail by the following examples. However, they are intended to illustrate the present invention only, but the scope of the present invention is not limited by these examples.

**Example 1. Selection of single amino acid with excellent efficacy of alleviating cold stress for *Arabidopsis thaliana***

In order to select an amino acid with excellent efficacy of alleviating cold stress for *Arabidopsis thaliana*, *Arabidopsis thaliana* was grown, and by using two of growth inhibition and anthocyanin accumulation as indexes, the following experiment was performed.

Seeds of *Arabidopsis thaliana* were disinfected in a $H_2O_2$ 50%(v/v) solution for 2 minutes, and then rinsed in distilled water (DW) five times, and dark treatment was performed at 4 °C for 3 days. After sowing the seeds of *Arabidopsis thaliana* in a plant growth medium (1/2 MS; Murashige and Skoog Medium), they were grown in a plant growth chamber (temperature of 23 °C, humidity of 60-65%, light condition of light 16h/dark 8h) for 7 days.

Seedlings of *Arabidopsis thaliana* grown for 7 days were transferred to a cold stress (temperature of 13 °C, humidity of 60-65%, light condition of light 16h/dark 8h) condition, and the root length was measured at 3-day intervals, and the aerial part fresh weight was measured after 7 days.

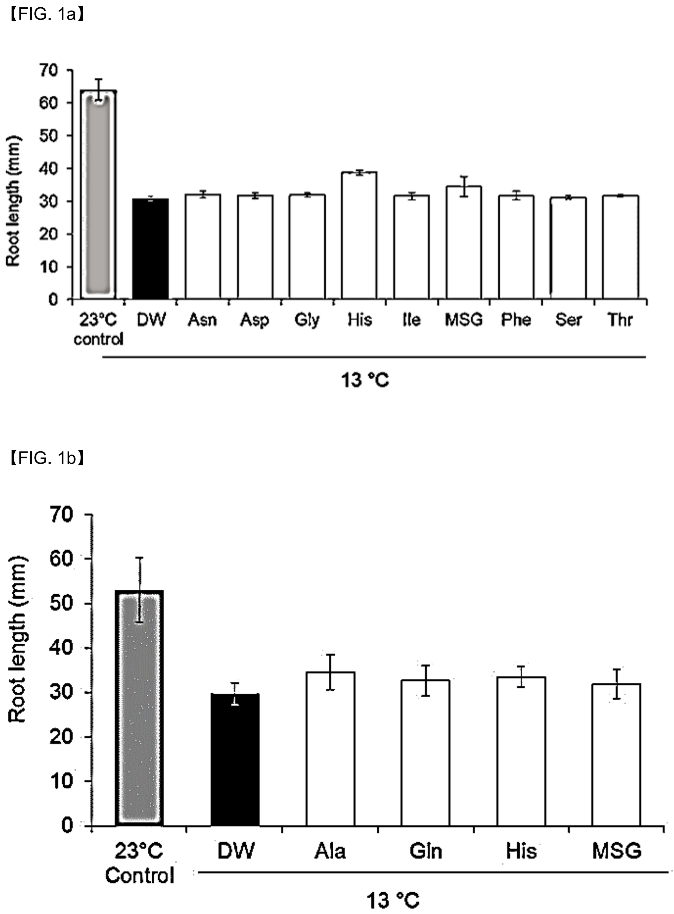

As an experimental group, cold stress (temperature of 13 °C, humidity of 60-65%, light condition of light 16h/dark 8h) was treated, and a single 0.1%(w/w) amino acid (asparagine, aspartic acid, glycine, histidine, isoleucine, sodium glutamate, phenylalanine, serine, threonine) aqueous solution was under foliar application three times at 3-day intervals. As a control group, there were a group which cold stress was not treated to and was grown at a normal temperature (temperature of 23 °C, humidity of 60-65%, light condition of light 16h/dark 8h), and a group to which cold stress was treated and distilled water (DW) was treated. The results were shown in FIG. 1a.

On the other hand, for alanine, glutamine, histidine, and sodium glutamate, the experiment was repeatedly performed by the substantially same method as the method described above, and the aerial part fresh weight was measured, and then the results were shown in FIG. 1b.

In addition, the seedlings of *Arabidopsis thaliana* grown for 7 days were transferred to a cold stress (temperature of 13 °C, humidity of 60-65%, light condition of light 16h/dark 8h) condition, and samples for measuring anthocyanins were obtained and stored in a cryogenic freezer.

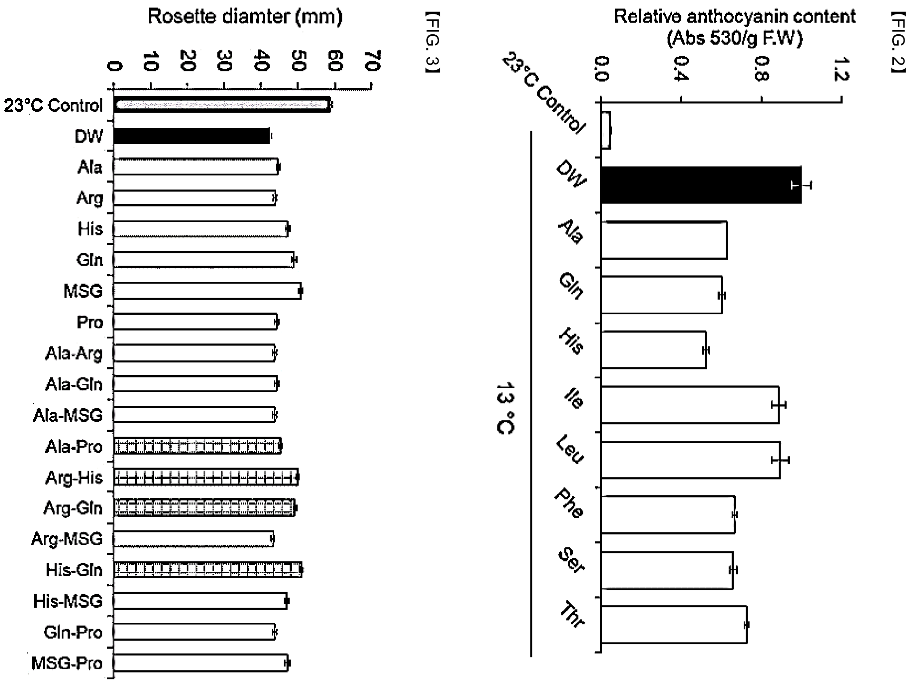

As an experimental group, cold stress (temperature of 13 °C, humidity of 60-65%, light condition of light 16h/dark 8h) was treated, and a single 0.1%(w/w) amino acid (alanine, glutamine, histidine, isoleucine, leucine, methionine, phenylalanine, serine, threonine) aqueous solution was under foliar application three times at 3-day intervals. As a control group, there were a group which cold stress was not treated to and was grown at a normal temperature (temperature of 23 °C, humidity of 60-65%, light condition of light 16h/dark 8h), and a group to which cold stress was treated and distilled water (DW) was treated. The results were shown in FIG. 2.

The methods for extracting and measuring anthocyanins were as follows:

The samples kept frozen of about 30 to 50 mg were transferred to Eppendorf tubes. At this time, since they were samples stored in the cryogenic freezer, liquid nitrogen was used during transport, and it was taken care not to melt during transferring. 99% methanol (MeOH) and 1% hydrochloric acid (HCl) solution 1 ml were added to a tube, respectively, and mixed well using a vortex, and then dart treatment was performed for 24 hours. The samples treated in the dark for 24 hours were centrifuged (4 °C, max speed, 5minute s), and then only the supernatant of about 200 μl was transferred to a 96 microplate. Since the anthocyanins extracted at this time were easily broken by light, the dark condition was maintained until measurement.

Using Spectro-photometer (BioTek, SYNERGY H1 microplate reader) equipment, the absorbance values were measured at wavelengths of 530 nm and 657 nm, and the anthocyanin content of the samples was calculated.

$$\text{Anthocyanin content} = (A530\text{-}0.25)^*A657$$

(A: Absorbnace, A530: absorbance at 530 nm wavelength, A657: absorbance at 657 nm wavelength)

**Example 1-1. Root growth and development**

The results of the root growth and development experiment of *Arabidopsis thaliana* were shown in FIG. 1a and Table 1 below.

[Table 1]

|  | Root length (mm) | Standard deviation | % compared to control group |
|---|---|---|---|
| Control group (normal growth and development) | 64.0 | 3.19 | - |
| Control group (cold stress and distilled water treatment) | 30.8 | 0.73 | 100 |
| cold stress + Asn | 32.1 | 0.96 | 104.1 |
| cold stress + Asp | 31.7 | 0.83 | 102.9 |
| cold stress + Gly | 31.8 | 0.66 | 103.3 |
| cold stress + His | 38.8 | 0.75 | 125.8 |
| cold stress + Ile | 31.6 | 1.11 | 102.5 |
| cold stress + MSG | 34.6 | 3.02 | 112.1 |
| cold stress + Phe | 31.7 | 1.32 | 102.9 |
| cold stress + Ser | 31.1 | 0.50 | 100.9 |
| cold stress + Thr | 31.6 | 0.48 | 102.7 |

As could be confirmed in FIG. 1a and Table 1, as the result of verification of the efficacy of alleviating cold stress, it was confirmed that in the control group in which cold stress was induced, compared to the control group normally grown, the root growth and development were significantly reduced by 50% or more, but in case of the experimental group treated with asparagine (Asn), aspartic acid (Asp), glycine (Gly), histidine (His), isoleucine (Ile), sodium glutamate (MSG), phenylalanine (Phe), serine (Ser), or threonine (Thr), compared to the control group in which cold stress was induced, the root growth and development were recovered.

In addition, the results of the root growth and development experiment of *Arabidopsis thaliana* performed again for alanine, glutamine, histidine, and sodium glutamate were shown in FIG. 1b and Table 2 below.

[Table 2]

| | Root length (mm) | Standard deviation | % compared to control group |
|---|---|---|---|
| Control group (normal growth and development) | 53.0 | 7.18 | - |
| Control group (cold stress and distilled water treatment) | 29.7 | 2.47 | 100 |
| cold stress + Ala | 34.6 | 3.9 | 116.3 |
| cold stress + Gln | 32.6 | 3.5 | 109.7 |
| cold stress + His | 33.5 | 2.4 | 112.8 |
| cold stress + MSG | 31.9 | 3.2 | 107.3 |

As could be confirmed in FIG. 1b and Table 2, as a result of re-verifying the efficacy of alleviating cold stress for 4 kinds of amino acids, it was confirmed that in the control group in which cold stress was induced, compared to the control group normally grown, the root growth and development were significantly reduced by 50% or more, but in case of the experimental group to which cold stress was induced and alanine (Ala), glutamine (Gln), histidine (His), or sodium glutamate (MSG) was treated, compared to the control group in which cold stress was induced, the root growth and development were recovered.

**Example 1-2. Anthocyanin content**

A representative phenotypic change of cold stressed plants includes anthocyanin accumulation. The anthocyanin content (Abs 530/g F.W) was measured in the samples obtained from the aerial part tissue of *Arabidopsis thaliana,* and the results were shown in FIG. 2 and Table 3 below.

[Table 3]

| | Relative anthocyanin content | Standard deviation | % compared to control group |
|---|---|---|---|
| Control group (normal growth and development) | 0.05 | 3.19 | - |
| Control group (cold stress and distilled water treatment) | 1.00 | 0.73 | 100 |
| cold stress + Ala | 0.63 | 0.72 | 62.8 |
| cold stress + Gln | 0.60 | 1.07 | 60.1 |
| cold stress + His | 0.52 | 0.02 | 52.3 |
| cold stress + Ile | 0.89 | 0.03 | 88.7 |
| cold stress + Leu | 0.89 | 0.04 | 89.3 |
| cold stress + Phe | 0.66 | 0.01 | 66.5 |
| cold stress + Ser | 0.66 | 0.02 | 65.9 |
| cold stress + Thr | 0.73 | 0.01 | 72.7 |

As could be confirmed in FIG. 2 and Table 3, as a result of verifying the efficacy of alleviating cold stress, in the control group in which cold stress was induced, compared to the control group normally grown, the anthocyanin content increased significantly, but in case of the experimental group to which cold stress was induced and alanine (Ala), glutamine (Gln), histidine (His), isoleucine (Ile), leucine (Leu), phenylalanine (Phe), serine (Ser), or threonine (Thr) was treated, compared to the control group in which cold stress was induced, the anthocyanin content was significantly reduced. This indicates that the activity of the anthocyanin synthesis process by cold stress is reduced, showing that the efficacy of alleviating cold stress is excellent.

By summarizing the experimental results of Example 1-1 and Example 1-2, it was confirmed that the efficacy of alleviating cold stress of alanine (Ala), asparagine (Asn), aspartic acid (Asp), glutamine (Gln), glycine (Gly), histidine (His), isoleucine (Ile), leucine (Leu), glutamic acid (Glu), phenylalanine (Phe), serine (Ser), and threonine (Thr) was excellent.

**Example 2. Selection of amino acid combination with excellent efficacy of alleviating cold stress for *Arabidopsis thaliana***

In order to verify a synergistic effect between amino acids when at least 2 kinds of amino acids are treated in combination, among 6 kinds of amino acids of alanine (Ala), histidine (His), glutamine (Gln), sodium glutamate (MSG), arginine (Arg), and proline (Pro), an experiment was performed for single amino acid and amino acid combinations.

After sowing by filling bed soil (Sungro company, Sunshine mix #5), dark treatment was performed at 4 °C for 3 days. They were grown in a plant growth chamber (temperature of 23°C, humidity of 60-65%, light condition of light 16h/dark 8h), and 2.5 to 3 weeks after sowing, they were transferred to a low-temperature growth chamber (cold stress condition, temperature of 13 °C, light condition of light 16h/dark 8h). In 6 hours after moving into the low-temperature growth chamber, the amino acids were under primary foliar fertilization at a dosage of 1 ml/plant, and secondary foliar fertilization after 3 days was performed, and final growth and development (leaf diameter and weight) after 7 days was measured, and samples for measuring anthocyanins were obtained and stored in a cryogenic freezer.

As a control group, there were a group which stress was not treated to and was grown at a normal temperature (temperature of 23 °C, humidity of 60-65%, light condition of light 16h/dark 8h), and a group to which cold stress (temperature of 13 °C, humidity of 60-65%, light condition of light 16h/dark 8h) was treated and distilled water (DW) was treated, as same as Example 1. The experimental group was treated with cold stress, and (1) a 0.1%(w/w) amino acid aqueous solution of one of the 6 kinds, and (2) a 0.1%(w/w) amino acid aqueous solution of a combination of 2 kinds of amino acids (15 kinds of combinations in total) (first amino acid 0.05%(w/w) + second amino acid 0.05%(w/w)) were under foliar application 3 times at 3-day intervals.

**Example 2-1. Aerial part growth and development**

The results of the aerial part growth and development experiment of *Arabidopsis thaliana* were shown in FIG. 3 and Table 4 below.

[Table 4]

|  | Aerial part size (mm) | Standard deviation | % compared to control group |
|---|---|---|---|
| Control group (normal growth and development) | 58.8 | 0.62 | - |
| Control group (cold stress and distilled water treatment) | 42.4 | 0.48 | 100 |
| cold stress + Ala | 44.6 | 0.53 | 105.3 |
| cold stress + Arg | 43.8 | 0.47 | 103.3 |
| cold stress + His | 47.2 | 0.51 | 111.3 |
| cold stress + Gln | 49.0 | 0.52 | 115.5 |
| cold stress + MSG | 50.8 | 0.55 | 119.8 |
| cold stress + Pro | 44.2 | 0.62 | 104.3 |
| cold stress + Ala-Arg | 43.7 | 0.49 | 103.0 |
| cold stress + Ala-Gln | 44.2 | 0.50 | 104.2 |
| cold stress + Ala-MSG | 43.7 | 0.49 | 103.2 |
| cold stress + Ala-Pro | 45.2 | 0.52 | 106.6 |
| cold stress + Arg-His | 49.9 | 0.60 | 117.7 |
| cold stress + Arg-Gln | 49.2 | 0.52 | 116.0 |
| cold stress + Arg-MSG | 43.2 | 0.60 | 101.9 |
| cold stress + His-Gln | 51.0 | 0.55 | 120.4 |
| cold stress + His-MSG | 47.1 | 0.55 | 111.0 |

(continued)

| | Aerial part size (mm) | Standard deviation | % compared to control group |
|---|---|---|---|
| cold stress + Gln-Pro | 43.8 | 0.50 | 103.2 |
| cold stress + MSG-Pro | 47.2 | 0.53 | 111.2 |

As could be confirmed in FIG. 3 and Table 4, in the control group in which cold stress was induced, compared to the control group normally grown, the aerial part growth and development were significantly reduced, but in case of the experimental groups to which cold stress was induced and single amino acid of the 6 kinds was treated alone (Ala, Arg, His, Gln, MSG, Pro), compared to the control group in which cold stress was induced, the aerial part growth and development increased, and through this, the efficacy of alleviating cold stress of the 6 kinds of amino acids was re-verified.

In case of the experimental group to which a combination of 2 kinds of amino acids was treated, in the experimental groups to which the combination of alanine and arginine (Ala-Arg), the combination of alanine-glutamine (Ala-Gln), the combination of alanine-sodium glutamate (Ala-MSG), the combination of arginine-sodium glutamate (Arg-MSG), the combination of histidine-sodium glutamate (His-MSG), the combination of glutamine-proline (Gln-Pro), and the combination of sodium glutamate-proline (MSG-Pro), compared to the control group to which cold stress was induced, the aerial part growth and development increased, thereby confirming that there was efficacy of alleviating cold stress (indicated in white bars in FIG. 3).

In particular, the experimental groups to which the combination of alanine and proline (Ala-Pro), the combination of arginine and histidine (Arg-His), the combination of arginine and glutamine (Arg-Gln), and the combination of histidine-glutamine (His-Gln) were treated, showed the efficacy of alleviating cold stress, compared to the control group to which cold stress was induced, and also, exhibited more excellent efficacy of alleviating cold stress even than the experimental groups to which each amino acid was treated alone, thereby confirming that a synergistic effect was shown between amino acids (indicated in patterned bars in FIG. 3).

**Example 2-2. Anthocyanin content**

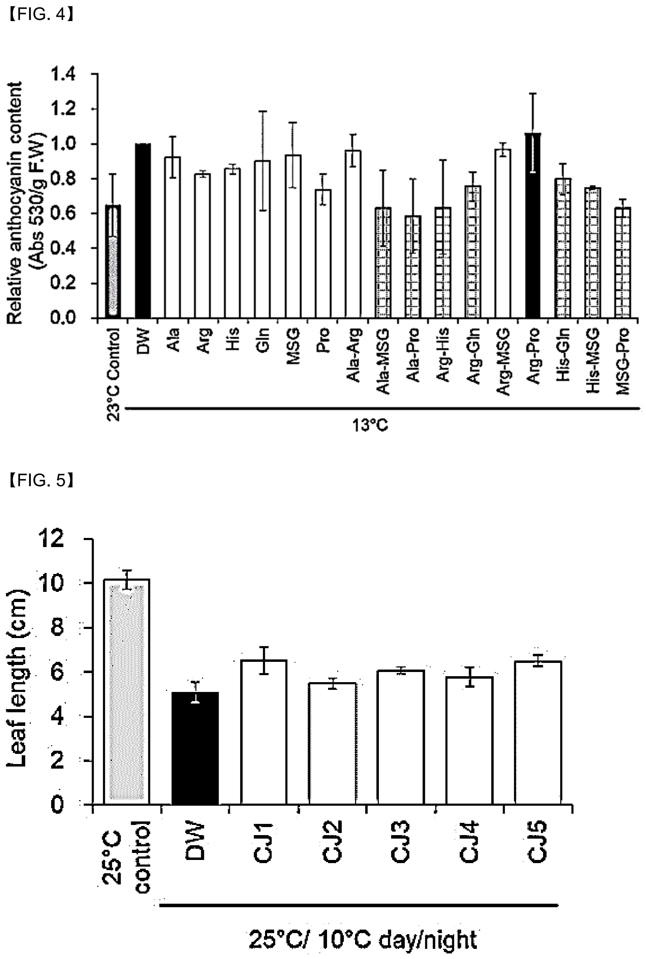

The anthocyanin content was measured in samples obtained from the aerial part tissue of *Arabidopsis thaliana,* and the results were shown in FIG. 4 and Table 5 below.

[Table 5]

| | Relative anthocyanin content | Standard deviation | % compared to control group |
|---|---|---|---|
| Control group (normal growth and development) | 0.6 | 0.18 | - |
| Control group (cold stress and distilled water treatment) | 1.0 | 0.00 | 100 |
| cold stress + Ala | 0.9 | 0.12 | 92.2 |
| cold stress + Arg | 0.8 | 0.02 | 82.6 |
| cold stress + His | 0.9 | 0.03 | 85.5 |
| cold stress + Gln | 0.9 | 0.28 | 90.0 |
| cold stress + MSG | 0.9 | 0.19 | 93.5 |
| cold stress + Pro | 0.7 | 0.09 | 73.8 |
| cold stress + Ala-Arg | 1.0 | 0.09 | 96.1 |
| cold stress + Ala-MSG | 0.6 | 0.22 | 63.1 |
| cold stress + Ala-Pro | 0.6 | 0.21 | 58.4 |
| cold stress + Arg-His | 0.6 | 0.27 | 63.6 |
| cold stress + Arg-Gln | 0.8 | 0.08 | 75.6 |
| cold stress + Arg-MSG | 1.0 | 0.04 | 96.7 |
| cold stress + Arg-Pro | 1.1 | 0.22 | 106.3 |

(continued)

|  | Relative anthocyanin content | Standard deviation | % compared to control group |
|---|---|---|---|
| cold stress + His-Gln | 0.8 | 0.09 | 79.8 |
| cold stress + His-MSG | 0.7 | 0.01 | 74.6 |
| cold stress + MSG-Pro | 0.6 | 0.05 | 63.1 |

As could be confirmed in FIG. 4 and Table 5, in the control group in which cold stress was induced, compared to the control group normally grown, the anthocyanin content increased significantly, but in case of the experimental groups to which cold stress was induced and single amino acid of the 6 kinds was treated alone (Ala, Arg, His, Gln, MSG, Pro), compared to the control group in which cold stress was induced, the anthocyanin content was reduced, and through this, the efficacy of alleviating cold stress of the 6 kinds of amino acids was re-verified.

In case of the experimental group treated with a combination of 2 kinds of amino acids, in the experimental groups to which the combination of alanine and arginine (Ala-Arg), and the combination of arginine and sodium glutamate (Arg-MSG) were treated, compared to the control group to which cold stress was induced, the anthocyanin content was reduced, thereby confirming that there was efficacy of alleviating cold stress (indicated in white bars in FIG. 4).

In particular, the experimental groups to which the combination of alanine and sodium glutamate (Ala-MSG), the combination of alanine and proline (Ala-Pro), the combination of arginine and histidine (Arg-His), the combination of arginine and glutamine (Arg-Gln), the combination of histidine and glutamine (His-Gln), the combination of histidine and sodium glutamate (His-MSG), and the combination of sodium glutamate and proline (MSG-Pro) were treated, showed the efficacy of alleviating cold stress, compared to the control group to which cold stress was treated, and also had more excellent efficacy of alleviating cold stress even than the experimental groups to which each amino acid was treated alone, thereby confirming that a synergistic effect was shown between amino acids (indicated in patterned bars in FIG. 4).

By summarizing the experimental results of Example 2-1 and Example 2-2, it was confirmed that the efficacy of alleviating cold stress of the combination of alanine and arginine (Ala-Arg), the combination of alanine and glutamine (Ala-Gln), the combination of alanine and sodium glutamate (Ala-MSG), the combination of alanine and proline (Ala-Pro), the combination of arginine and histidine (Arg-His), the combination of arginine and glutamine (Arg-Gln), the combination of arginine and sodium glutamate (Arg-MSG), the combination of histidine and glutamine (His-Gln), the combination of glutamine and proline (Gln-Pro), the combination of sodium glutamate and proline (MSG-Pro) was excellent.

**Example 3. Selection of amino acid combination with excellent efficacy of alleviating cold stress for cucumber**

In consideration of the synergistic effect and antagonistic effect of the amino acids showing the efficacy of alleviating cold stress shown in Example 1 and Example 2, as shown in Table 6 below, 5 kinds of amino acid compositions showing the efficacy of alleviating cold stress were designed.

Cucumber (*Cucumis sativus*) seeds were sown and after about 3 weeks, at the second leaf stage of cucumber seedlings, cucumber was transferred to a cold stress (light condition of temperature of 25 °C, humidity of 60%, 12 hours / dark condition of temperature of 10 °C, humidity of 60%, 12hours) condition to induce cold stress.

The experimental group was treated with cold stress, and 1 day after inducing cold stress by diluting the amino acid aqueous solution comprising the composition of Table 6 below by 500 folds, primary application was performed at a dosage of 3 ml/plant, and foliar application was performed 3 times in total at 4-day intervals. As a control group, there were a group which cold stress was not treated and was grown at a normal temperature (light condition of temperature of 25 °C, humidity of 60-65%, 12hours / dark condition of 12hours), and a group to which cold stress was treated and distilled water (DW) was treated.

[Table 6]

|  | Composition |
|---|---|
| C1, Control group (normal growth and development) | - |
| C2, Control group (cold stress and distilled water treatment) | Distilled water treatment |
| CJ1 | 5%(w/w) Arg, 6%(w/w) His-HCl, 12%(w/w) MSG |

(continued)

| | Composition |
|---|---|
| CJ2 | 5%(w/w) Arg, 6%(w/w) His-HCl, 12%(w/w) Lys |
| CJ3 | 3%(w/w) Arg, 3%(w/w) His-HCl, 8%(w/w) MSG, 8%(w/w) Lys |
| CJ4 | 5%(w/w) Arg, 6%(w/w) His-HCl, 10%(w/w) MSG, 2%(w/w) Val |
| CJ5 | 5%(w/w) Arg, 6%(w/w) His-HCl, 10%(w/w) MSG, 2%(w/w) Val, 0.5%(w/w) Trp |

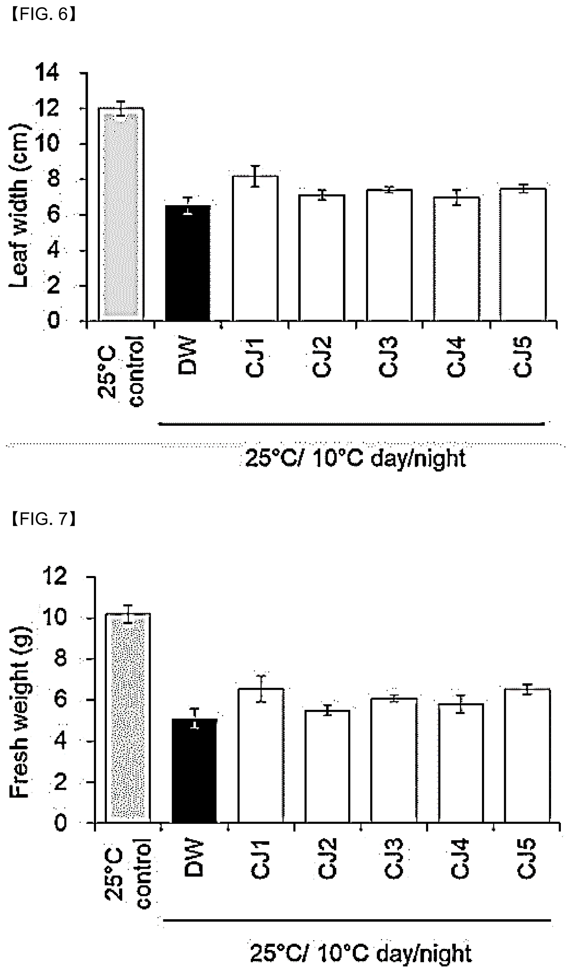

The leaf length (cm), leaf width (cm), and fresh weight (g) of cucumber were measured, and they were shown in FIG. 5 to FIG. 7 and Table 7 to Table 9.

[Table 7]

| Leaf length (cm) of cucumber | | | |
|---|---|---|---|
| | Leaf length (mean value) | Standard deviation | % compared to control group (C2) |
| C1, Control group (normal growth and development) | 10.18 | 0.46 | - |
| C2, Control group (cold stress and distilled water treatment) | 5.10 | 0.45 | 100.00 |
| CJ1 | 6.54 | 0.29 | 128.24 |
| CJ2 | 5.50 | 0.11 | 107.84 |
| CJ3 | 6.08 | 0.23 | 119.22 |
| CJ4 | 5.80 | 0.28 | 113.73 |
| CJ5 | 6.52 | 0.30 | 127.84 |

[Table 8]

| Leaf width (cm) of cucumber | | | |
|---|---|---|---|
| | Leaf width (mean value) | Standard deviation | % compared to control group (C2) |
| C1, Control group (normal growth and development) | 12.0 | 0.411582 | - |
| C2, Control group (cold stress and distilled water treatment) | 6.5 | 0.459783 | 100.00 |
| CJ1 | 8.2 | 0.261916 | 126.15 |
| CJ2 | 7.1 | 0.151658 | 109.23 |
| CJ3 | 7.4 | 0.430116 | 113.85 |
| CJ4 | 7.0 | 0.237908 | 107.69 |
| CJ5 | 7.5 | 0.559106 | 115.38 |

[Table 9]

| Fresh weight (g) of cucumber | | | |
|---|---|---|---|
| | Fresh weight (mean value) | Standard deviation | % compared to control group (C2) |
| C1, Control group (normal growth and development) | 11.1 | 0.488104 | - |
| C2, Control group (cold stress and distilled water treatment) | 5.9 | 0.190877 | 100.00 |

(continued)

| Fresh weight (g) of cucumber | | | |
|---|---|---|---|
| | Fresh weight (mean value) | Standard deviation | % compared to control group (C2) |
| CJ1 | 6.9 | 0.166883 | 116.95 |
| CJ2 | 6.0 | 0.123069 | 101.69 |
| CJ3 | 6.3 | 0.206674 | 106.78 |
| CJ4 | 6.1 | 0.328764 | 103.39 |
| CJ5 | 6.3 | 0.223482 | 106.78 |

As could be confirmed in FIG. 5 to FIG. 7 and Table 7 to Table 9, in the control group in which cold stress was induced, compared to the control group normally grown, the leaf length, leaf width, and fresh weight were significantly reduced, but in case of the experimental group in which cold stress was induced and the amino acid compositions (CJ1, CJ2, CJ3, CJ4, CJ5) were treated, compared to the control group in which cold stress was induced, the leaf length, leaf width, and fresh weight increased, thereby confirming that the five kinds of amino acid compositions had the efficacy of alleviating cold stress.

From the above description, those skilled in the art to which the present invention pertains will understand that the present invention can be implemented in other specific forms without changing the technical spirit or essential features thereof. In this regard, it should be understood that the examples described above are exemplary and not restrictive in all aspects. The scope of the present invention should be interpreted as including all changed or modified forms derived from the meaning and scope of the claims described below and equivalent concepts thereof rather than the detailed description above.

**Claims**

1. A composition for alleviating cold stress, comprising any one amino acid selected from the group consisting of alanine, asparagine, aspartic acid, glutamine, glycine, histidine, isoleucine, leucine, glutamic acid, phenylalanine, serine and threonine as an active ingredient.

2. The composition for alleviating cold stress according to claim 1, wherein the amino acid is any one selected from the group consisting of alanine, glutamine, histidine, isoleucine, phenylalanine, serine and threonine.

3. The composition for alleviating cold stress according to claim 1, wherein the composition consists of the amino acid and water.

4. The composition for alleviating cold stress according to claim 1, wherein the concentration of the amino acid comprised in the composition is 0.001 to 20%(w/w).

5. The composition for alleviating cold stress according to claim 1, treated to at least one kind of plant selected from the group consisting of plants of the family of Cucurbitaceae, plants of the family of Asteraceae, plants of the family of Brassicaceae, plants of the family of Fabaceae, plants of the family of Rosaceae and plants of the family of Solanaceae.

6. The composition for alleviating cold stress according to claim 1, treated to at least one kind of plant selected from the group consisting of plants of the genus of Cucumis, plants of the genus of Citrullus, plants of the genus of Cucurbita, plants of the genus of *Luffa,* plants of the genus of Benincasa, plants of the genus of Momordica, plants of the genus of Raphanus, plants of the genus of Lactuca, plants of the genus of Arabidopsis, plants of the genus of Brassica, plants of the genus of Phaseolus, plants of the genus of Glycine, plants of the genus of Pisum, plants of the genus of Arachis, plants of the genus of Euchresta, plants of the genus of Rhynchosia, plants of the genus of Lens, plants of the genus of Fragaria, plants of the genus of Rubus, plants of the genus of Solanum, plants of the genus of Nicotiana and, plants of the genus of Capsicum.

7. A composition for alleviating cold stress comprising amino acids below as active ingredients:

   (1) a combination of at least two kinds selected from the group consisting of alanine, asparagine, aspartic acid, glutamine, glycine, histidine, isoleucine, leucine, methionine, glutamic acid, phenylalanine, serine and threonine; or
   (2) a combination of (i) at least one kind selected from the group consisting of alanine, asparagine, aspartic acid, glutamine, glycine, histidine, isoleucine, leucine, methionine, glutamic acid, phenylalanine, serine and threonine, and (ii) at least one kind selected from the group consisting of arginine and proline.

8. The composition for alleviating cold stress according to claim 7, wherein the amino acid is,

   (1) a combination of at least two kinds selected from the group consisting of alanine, glutamine, histidine, isoleucine, glutamic acid, phenylalanine, serine and threonine; or
   (2) a combination of (i) at least one kind selected from the group consisting of alanine, glutamine, histidine, isoleucine, glutamic acid, phenylalanine, serine and threonine, and (ii) at least one kind selected from the group consisting of arginine and proline.

9. The composition for alleviating cold stress according to claim 7, wherein the amino acid is,

   (1) a combination of at least two kinds selected from the group consisting of alanine, glutamine, histidine, and glutamic acid; or
   (2) a combination of (i) at least one kind selected from the group consisting of alanine, glutamine, histidine, and glutamic acid, and (ii) at least one kind selected from the group consisting of arginine and proline.

10. The composition for alleviating cold stress according to claim 7, wherein the amino acid is,

    (1) a combination of at least two kinds selected from the group consisting of alanine, glutamine, histidine, and glutamic acid; or
    (2) a combination of (i) any one selected from the group consisting of alanine, glutamine, histidine, and glutamic acid, and (ii) any one selected from the group consisting of arginine and proline.

11. The composition for alleviating cold stress according to claim 7, wherein the amino acid is,

    (1) a combination of alanine and arginine, glutamine, glutamic acid or proline;
    (2) a combination of arginine and histidine, glutamine, or glutamic acid;
    (3) a combination of histidine and glutamine or glutamic acid;
    (4) a combination of glutamine and proline; or
    (5) a combination of glutamic acid and proline.

12. The composition for alleviating cold stress according to claim 7, wherein the concentration of the amino acid comprised in the composition is 0.001 to 20%(w/w).

13. The composition for alleviating cold stress according to claim 7, treated to at least one kind of plant selected from the group consisting of plants of the family of Cucurbitaceae, plants of the family of Asteraceae, plants of the family of Brassicaceae, plants of the family of Fabaceae, plants of the family of Rosaceae and plants of the family of Solanaceae.

14. The composition for alleviating cold stress according to claim 7, treated to at least one kind of plant selected from the group consisting of plants of the genus of Cucumis, plants of the genus of Citrullus, plants of the genus of Cucurbita, plants of the genus of *Luffa,* plants of the genus of Benincasa, plants of the genus of Momordica, plants of the genus of Raphanus, plants of the genus of Lactuca, plants of the genus of Arabidopsis, plants of the genus of Brassica, plants of the genus of Phaseolus, plants of the genus of Glycine, plants of the genus of Pisum, plants of the genus of Arachis, plants of the genus of Euchresta, plants of the genus of Rhynchosia, plants of the genus of Lens, plants of the genus of Fragaria, plants of the genus of Rubus, plants of the genus of Solanum, plants of the genus of Nicotiana and, plants of the genus of Capsicum.

15. A composition for alleviating cold stress, comprising:

(1) arginine, histidine; and
(2) at least one kind of amino acid selected from the group consisting of glutamic acid, lysine, valine, and tryptophan, as an active ingredient.

**16.** The composition for alleviating cold stress according to claim 15, wherein the amino acid is at least one kind selected from the group consisting of (1) to (5) below:

(1) a combination of arginine, histidine, and glutamic acid;
(2) a combination of arginine, histidine, and lysine;
(3) a combination of arginine, histidine, glutamic acid, and lysine;
(4) a combination of arginine, histidine, glutamic acid, and valine; and
(5) a combination of arginine, histidine, glutamic acid, valine, and tryptophan.

**17.** The composition for alleviating cold stress according to claim 15, wherein the composition comprises

histidine 0.1 to 5 parts by weight;
glutamic acid 0.1 to 5 parts by weight;
lysine 0.1 to 5 parts by weight;
valine 0.01 to 5 parts by weight; or
tryptophan 0.01 to 5 parts by weight, based on arginine 1 part by weight.

**18.** The composition for alleviating cold stress according to claim 15, wherein the concentration of the amino acid comprised in the composition is 5 to 50%(w/w).

**19.** The composition for alleviating cold stress according to claim 15, treated to at least one kind of plant selected from the group consisting of plants of the family of Cucurbitaceae, plants of the family of Asteraceae, plants of the family of Brassicaceae, plants of the family of Fabaceae, plants of the family of Rosaceae and plants of the family of Solanaceae.

**20.** The composition for alleviating cold stress according to claim 15, treated to at least one kind of plant selected from the group consisting of plants of the genus of Cucumis, plants of the genus of Citrullus, plants of the genus of Cucurbita, plants of the genus of *Luffa,* plants of the genus of Benincasa, plants of the genus of Momordica, plants of the genus of Raphanus, plants of the genus of Lactuca, plants of the genus of Arabidopsis, plants of the genus of Brassica, plants of the genus of Phaseolus, plants of the genus of Glycine, plants of the genus of Pisum, plants of the genus of Arachis, plants of the genus of Euchresta, plants of the genus of Rhynchosia, plants of the genus of Lens, plants of the genus of Fragaria, plants of the genus of Rubus, plants of the genus of Solanum, plants of the genus of Nicotiana and, plants of the genus of Capsicum.

**21.** A fertilizer composition, comprising the composition for alleviating cold stress of any one of claims 1 to 20.

**22.** An agrochemical composition, comprising the composition for alleviating cold stress of any one of claims 1 to 20.

**23.** A method for cultivating plants or a method for promoting growth of plants, comprising treating the composition for alleviating cold stress of any one of claims 1 to 20 into a plant.

**24.** A composition for promoting growth of plants comprising any one amino acid of 1) to 3) below as an active ingredient:

1) any one amino acid selected from the group consisting of alanine, asparagine, aspartic acid, glutamine, glycine, histidine, isoleucine, leucine, glutamic acid, phenylalanine, serine and threonine;
2)

(1) a combination of at least two kinds selected from the group consisting of alanine, asparagine, aspartic acid, glutamine, glycine, histidine, isoleucine, leucine, methionine, glutamic acid, phenylalanine, serine and threonine; or
(2) a combination of (i) at least one kind selected from the group consisting of alanine, asparagine, aspartic acid, glutamine, glycine, histidine, isoleucine, leucine, methionine, glutamic acid, phenylalanine, serine and threonine, and (ii) at least one kind selected from the group consisting of arginine and proline; or

3)

(1) arginine, histidine; and
(2) at least one kind of amino acid selected from the group consisting of glutamic acid, lysine, valine, and tryptophan.

25. A use of any one amino acid of 1) to 3) below for alleviating cold stress or promoting growth of plants:

1) any one amino acid selected from the group consisting of alanine, asparagine, aspartic acid, glutamine, glycine, histidine, isoleucine, leucine, glutamic acid, phenylalanine, serine and threonine;
2)

(1) a combination of at least 2 kinds selected from the group consisting of alanine, asparagine, aspartic acid, glutamine, glycine, histidine, isoleucine, leucine, methionine, glutamic acid, phenylalanine, serine and threonine; or
(2) a combination of (i) at least one kind selected from the group consisting of alanine, asparagine, aspartic acid, glutamine, glycine, histidine, isoleucine, leucine, methionine, glutamic acid, phenylalanine, serine and threonine, and (ii) at least one kind selected from the group consisting of arginine and proline; and

3)

(1) arginine, histidine; and
(2) at least one kind of amino acid selected from the group consisting of glutamic acid, lysine, valine, and tryptophan.

【FIG. 1a】

【FIG. 1b】

【FIG. 2】

【FIG. 3】

【FIG. 4】

【FIG. 5】

【FIG. 6】

【FIG. 7】

## INTERNATIONAL SEARCH REPORT

| International application No. |
| --- |
| **PCT/KR2024/005982** |

| A. | CLASSIFICATION OF SUBJECT MATTER |
| --- | --- |
| | **A01N 37/46**(2006.01)i; **A01P 21/00**(2006.01)i; **C05C 11/00**(2006.01)i; **A01G 7/06**(2006.01)i |

According to International Patent Classification (IPC) or to both national classification and IPC

| B. | FIELDS SEARCHED |
| --- | --- |

Minimum documentation searched (classification system followed by classification symbols)

A01N 37/46(2006.01); A01G 7/00(2006.01); A01N 37/42(2006.01); A01N 37/44(2006.01); A01N 55/00(2006.01);
A01N 59/00(2006.01); C05G 1/00(2006.01); C05G 3/00(2006.01); C05G 3/50(2020.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 아미노산(amino acid), 저온(low temperature), 성장(growth), 스트레스(stress), 식물 (plant), 비료(fertilizer), 농약(pesticide, agricultural chemicals)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | EP 4169381 A1 (AJINOMOTO CO., INC.) 26 April 2023 (2023-04-26)<br>See paragraphs [0015], [0021]-[0022], [0033]-[0035], [0109], [0117] and [0123]-[0124]; and claim 1. | 1-25 |
| A | KR 10-2021-0151190 A (SHOWA DENKO K.K.) 13 December 2021 (2021-12-13)<br>See paragraphs [0026], [0049], [0052]-[0053] and [0094]-[0095]; and claims 1 and 4. | 1-25 |
| A | KR 10-2016-0090201 A (DAE YU CO., LTD.) 29 July 2016 (2016-07-29)<br>See paragraph [0004]; and claims 1, 2 and 10. | 1-25 |
| A | US 11058116 B1 (AGRATEK PTE. LTD.) 13 July 2021 (2021-07-13)<br>See claims 1 and 25. | 1-25 |
| A | CN 111825493 A (ZIBO WAL FERTILIZER CO., LTD.) 27 October 2020 (2020-10-27)<br>See paragraph [0016]; and claim 1. | 1-25 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 August 2024** | **12 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 656 046 A1

International application No.

**PCT/KR2024/005982**

| Patent document cited in search report | | | Publication date (day/month/year) | Patent family member(s) | | | Publication date (day/month/year) |
|---|---|---|---|---|---|---|---|
| EP | 4169381 | A1 | 26 April 2023 | AU | 2021-293427 | A1 | 23 December 2021 |
| | | | | CN | 115942872 | A | 07 April 2023 |
| | | | | JP | 2023-106651 | A | 02 August 2023 |
| | | | | US | 2023-0210110 | A1 | 06 July 2023 |
| | | | | WO | 2021-256546 | A1 | 23 December 2021 |
| KR | 10-2021-0151190 | A | 13 December 2021 | CN | 113993379 | A | 28 January 2022 |
| | | | | EP | 3984361 | A1 | 20 April 2022 |
| | | | | KR | 10-2024-0063161 | A | 09 May 2024 |
| | | | | TW | 202107998 | A | 01 March 2021 |
| | | | | TW | I768374 | B | 21 June 2022 |
| | | | | US | 2022-0369569 | A1 | 24 November 2022 |
| | | | | WO | 2020-255934 | A1 | 24 December 2020 |
| KR | 10-2016-0090201 | A | 29 July 2016 | KR | 10-1690176 | B1 | 09 January 2017 |
| US | 11058116 | B1 | 13 July 2021 | None | | | |
| CN | 111825493 | A | 27 October 2020 | None | | | |

Form PCT/ISA/210 (patent family annex) (July 2022)

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230058742
- US 20180014536 A1